(19) Europäisches Patentamt / European Patent Office / Office européen des brevets

(11) **EP 2 840 704 A1**

(12) **EUROPEAN PATENT APPLICATION**
published in accordance with Art. 153(4) EPC

(43) Date of publication:
25.02.2015 Bulletin 2015/09

(51) Int Cl.:
*H02P 15/00* (2006.01)    *H02P 23/00* (2006.01)

(21) Application number: 13777862.7

(22) Date of filing: 15.04.2013

(86) International application number:
PCT/JP2013/002541

(87) International publication number:
WO 2013/157239 (24.10.2013 Gazette 2013/43)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 19.04.2012 JP 2012095472

(71) Applicant: TBK Co., Ltd.
Machida-shi, Tokyo 194-0045 (JP)

(72) Inventors:
• KURODA, Kiyoshi
Machida-shi
Tokyo 194-0045 (JP)

• HARA, Isao
Machida-shi
Tokyo 194-0045 (JP)
• HIGUCHI, Hisashi
Machida-shi
Tokyo 194-0045 (JP)
• SATO, Motoyasu
Machida-shi
Tokyo 194-0045 (JP)

(74) Representative: Louis Pöhlau Lohrentz
Patentanwälte
Postfach 30 55
90014 Nürnberg (DE)

(54) **RETARDER**

(57)    [Problems to be Solved]
In a retarder equipped with an induction motor, eliminating the requirement of a rotation speed sensor for detecting a rotation speed of the induction motor.
[Means for Solving the Problems]
In a retarder (10) formed of an induction motor (11) coupled to an output shaft (43) of a transmission (42) and a control unit (12) for controlling the induction motor (11), the control unit (12) obtains information detected by a rotation speed sensor for an engine (40) and information indicating a gear state of the transmission (42) from a vehicle (1) side (outside of the retarder (10)), derives a rotation speed of the induction motor (11) based on these information, and controls the induction motor (11) based on the derived rotation speed.

**FIG.1**

**Description**

Technical Field

The present invention relates to a retarder used in a vehicle, and more particularly to a retarder equipped with an induction motor capable of performing brake application, electric power generation, and torque generation.

Background Art

Recently, in response to the demand for low fuel consumption of vehicles, the engines mounted on vehicles tend to be downsized. The downsizing of the engines reduces the effect of exhaust brake and engine brake, and necessitates the combined use of retarders for assisting in braking ability of vehicles.

As for the retarders, eddy current systems and fluid systems are commonly known, but with respect to the eddy current retarders of these systems, conventional eddy current retarders have been neither able to generate electric power nor regenerate energy generated during braking so that they have not been unable to satisfy the recent demand for low energy consumption. Further, such retarders have not been able to produce driving torque by themselves for assisting in the engine output so that they have not been used as auxiliary power of vehicles.

Therefore, in the eddy current retarders, retarders equipped with an induction motor capable of applying braking, generating electric power, and producing torque have recently been proposed (e.g., Patent Documents 1 and 2).

In torque control of the induction motor, it is important to control the relative speed which is the difference between the synchronous speed and the actual rotation speed, and the amount of "slip" which is a ratio with respect to the synchronous speed. Therefore, in the retarders of such induction motor systems, it is generally necessary to obtain the actual rotation speed of the induction motor for controlling the induction motor.

Thus, it is necessary to mount a rotation speed sensor, such as a resolver or the like, on an induction motor. In mounting a rotation speed sensor on an induction motor, however, it is necessary to attach the rotation speed sensor to the high temperature rotor without being affected by the heat, thereby causing the structure of the entire motor to be complicated and giving rise to a problem of leading to cost increase, in addition to the cost of the rotation speed sensor itself.

[Prior Art Documents]

[Patent Documents]

Patent Document 1: Japanese Unexamined Patent Publication No. 8 (1996)-126118
Patent Document 2: Japanese Unexamined Patent Publication No. 10 (1998)-225096

Disclosure of the Invention

In order to reduce the cost of an induction motor, a sensor-less control that does not require a rotation speed sensor is proposed.

The principle of the sensor-less control proposed in the past is to detect a deviation between the theoretical value and the actual value in induced electromotive force generated in the stator when the rotor is controlled so as to rotate at a predetermined rotation speed, and to estimate and control the rotation speed of the rotor by controlling the command value of rotation speed based on the amount of deviation.

The method allows the control according to the principle if rotation control is performed from the state in which the rotor is stopped, but if the rotation control is performed from the state in which the rotor is rotating, the control according to the principle cannot be performed because the amount of deviation described above may become excessive depending on the operation state of the rotor at the time of control and stable control becomes difficult.

The present invention has been developed in view of the circumstances described above, and it is an object of the present invention to provide, in retarders equipped with induction motors, a retarder capable of performing accurate sensor-less control regardless of the operation state of the motor.

A retarder of the present invention is a retarder used in a vehicle in which an axle is driven by an internal combustion engine via a transmission, the retarder including an induction motor coupled to an output shaft of the transmission, and a control means that derives a rotation speed of the induction motor based on information detected by a rotation speed sensor for the internal combustion engine provided in the vehicle and information indicating a gear state of the transmission obtained from the vehicle, and controls the induction motor based on the derived rotation speed.

In the retarder of the present invention, the transmission may be any type of transmission, such as MT (Manual Transmission), AT (Automatic Transmission), CVT (Continuously Variable Transmission), or the like.

The "information detected by a rotation speed sensor for the internal combustion engine (engine)" may be any signal as long as it corresponds to the rotation speed of the engine, such as the output signal of the engine rotation speed sensor itself (e.g., a signal so-called a rotation pulse signal), a digital signal corresponding to the engine rotation speed flowing through an in-vehicle digital communication system, such as CAN (Controlled Area Network), or the like.

Further, the "information indicating a gear state" may be any form of information as long as it eventually allows the speed reduction ratio of the transmission to be identified other than information of gear stage (including neutral). In a case where the control means obtains only the gear stage from the vehicle side, information of reduction rate at each gear stage needs to be obtained in advance.

The phrase "derives a rotation speed of the induction motor based on information detected by a rotation speed sensor for the internal combustion engine and information indicating a gear state of the transmission obtained from the vehicle" refers to obtain information of speed which is proportional to the rotation speed of the output shaft of the transmission, for example, by diving the rotation speed of the internal combustion engine by the speed reduction ratio of the transmission or the like.

In the retarder of the present invention, it is difficult to accurately derive the rotation speed of the induction motor under the state in which no driving force is conveyed between the internal combustion engine and the output shaft of the transmission, such as the case where a clutch provided in the vehicle is disconnected or the gear is in neutral. Therefore, the control means may be a means that, if a variation in rotation speed of the internal combustion engine per unit time exceeds a predetermined threshold value, i.e., if the rotation speed of the internal combustion engine is increased rapidly, puts the induction motor into uncontrolled state in which any control to the induction motor is stopped or controls the induction motor such that neither driving torque nor braking torque is generated, assuming that the clutch is being disconnected or the gear is being in neutral.

Further, the control means may be a means that puts the induction motor into uncontrolled state in which any control to the induction motor is stopped or controls the induction motor such that neither driving torque nor braking torque is generated if information indicating disconnection of a clutch provided in the vehicle is obtained or if the gear of the transmission is in neutral.

As vehicle speed sensors provided in vehicles are generally detect the rotation speed of the output shaft of the transmission, the induction motor may be controlled based also on the information detected by the vehicle speed sensor. In this case, the induction motor may be controlled by the processing easier than to derive the rotation speed of the induction motor (i.e., rotation speed of the output shaft of the transmission) based on the information detected by the rotation speed sensor for the internal combustion engine and the information indicating the gear state of the transmission.

The vehicle speed sensors for which rotation detection sensors, such as tachogenerators and the like, are generally used, however, the speed detection accuracy is not so high in a low speed (low rotation) region and the induction motor may not be controlled accurately in the low speed region. The speed detection accuracy of the rotation speed sensor for the internal combustion engine which is a sensor identical to the vehicle speed sensor is not so high in the low speed region as in the vehicle speed sensor, but, unless the speed reduction ratio of the transmission falls below 1, the rotation speed of the rotation speed sensor for the internal combustion engine is higher than that of the vehicle speed sensor, so that higher speed detection accuracy may be obtained by deriving the rotation speed of the induction motor based on the information detected by the rotation speed sensor for the internal combustion engine and the information indicating the gear state of the transmission under such circumstances.

Therefore, the control means may further include a function to control the induction motor based on information detected by a vehicle speed sensor provided in the vehicle, and the control means may be a means that performs switching, based on at least one of the information detected by the vehicle speed sensor and the information indicating a gear state of the transmission, whether to control the induction motor based on the information detected by the rotation speed sensor and the information indicating a gear state of the transmission or to control the induction motor based on the information detected by the vehicle speed sensor.

The "information detected by a vehicle speed sensor provided in the vehicle" may be any signal as long as it corresponds to the vehicle speed, such as the output signal of the vehicle speed sensor itself (e.g., a signal so-called a vehicle speed pulse signal), a digital signal corresponding to the vehicle speed flowing through an in-vehicle digital communication system, such as CAN (Controlled Area Network), or the like.

The phrase "control the induction motor based on the information detected by the vehicle speed sensor" refers to control the induction motor based on the information described above and if, for example, the induction motor is controlled based on the vehicle speed pulse signal, the control circuit (control means) of the retarder is configured to control the induction motor based on the output signal of the rotation speed sensor originally provided in the induction motor, such as a resolver, because the vehicle speed sensor generally detects the rotation speed of the output shaft of the transmission to which the induction motor is coupled, and if the output signal of the rotation speed sensor original provided in the induction motor is identical to the vehicle speed pulse signal, the received vehicle speed pulse signal may be deemed as the output signal of the rotation speed sensor and the existing control circuit of the induction motor may be used directly.

Even in the case where the control circuit (control means) of the retarder is configured to control the induction motor based on the output signal of the rotation speed sensor originally provided in the induction motor, if the output signal of the rotation speed sensor originally provided in the induction motor and the vehicle speed pulse signal are different types of signals or if a digital signal corresponding to the vehicle speed flowing through the in-vehicle digital communication system, such as CAN (Controller Area Network), is received, the received signal needs to be converted so as to correspond to the signal indicating the rotation speed of the induction motor in the control circuit of the induction motor.

In this case, therefore, the control means may be a means that derives a rotation speed of the induction motor based on the information detected by the vehicle speed sensor and controls the induction motor based on the derived rotation speed.

A control method of the present invention is a method in a retarder used in a vehicle in which an axle is driven by an internal combustion engine via a transmission, the method controlling an induction motor coupled to an output shaft of the transmission, wherein the method derives a rotation speed of the induction motor based on information detected by a rotation speed sensor for the internal combustion engine provided in the vehicle and information indicating a gear state of the transmission obtained from the vehicle, and controls the induction motor based on the derived rotation speed.

The control method of the present invention may put the induction motor into uncontrolled state in which any control to the induction motor is stopped or controls the induction motor such that neither driving torque nor braking torque is generated if a variation in rotation speed of the internal combustion engine per unit time exceeds a predetermined threshold value.

Further, the control method may put the induction motor into uncontrolled state in which any control to the induction motor is stopped or controls the induction motor such that neither driving torque nor braking torque is generated if information indicating disconnection of a clutch provided in the vehicle is obtained or if the gear of the transmission is in neutral.

Still further, the control method may further obtain information detected by a vehicle speed sensor provided in the vehicle and the method may perform switching, based on at least one of the information detected by the vehicle speed sensor and the information indicating a gear state of the transmission, whether to control the induction motor based on the information detected by the rotation speed sensor and the information indicating a gear state of the transmission or to control the induction motor based on the information detected by the vehicle speed sensor.

In this case, the control method may derive a rotation speed of the induction motor based on the information detected by the vehicle speed sensor and control the induction motor based on the derived rotation speed.

According to the retarder and control method of the present invention, a rotation speed of an induction motor is derived based on information detected by a rotation speed sensor for the internal combustion engine provided in the vehicle and information indicating a gear state of the transmission obtained from the vehicle, and the induction motor is controlled based on the derived rotation speed, thereby allowing the rotation speed of the induction motor to be obtained without mounting a rotation speed sensor on the induction motor. This allows accurate sensor-less control regardless of the operation state of the motor with low cost. Note that the retarder of the present invention may be applied to any type of vehicle regardless of the type of vehicle on which it is mounted.

Further, if a variation in rotation speed of the internal combustion engine per unit time exceeds a predetermined threshold value, i.e., if the rotation speed of the internal combustion engine is increased rapidly, the retarder may be prevented from falling into a dangerous operating condition based on inaccurate information by putting the induction motor into uncontrolled state in which any control to the induction motor is stopped or controlled such that neither driving torque nor braking torque is generated, assuming that the clutch is being disconnected or the gear is being in neutral.

Further, the identical effect to that of the foregoing may also be obtained if the induction motor is put into uncontrolled state in which any control to the induction motor is stopped or controlled such that neither driving torque nor braking torque is generated when information indicating disconnection of a clutch provided in the vehicle is obtained or when the gear of the transmission is in neutral.

Still further, if information detected by a vehicle speed sensor provided in the vehicle is further obtained and switching is performed, based on at least one of the information detected by the vehicle speed sensor and the information indicating a gear state of the transmission, whether to control the induction motor based on the information detected by the rotation speed sensor and the information indicating a gear state of the transmission or to control the induction motor based on the information detected by the vehicle speed sensor, the speed detection accuracy may be improved by the use of a method of controlling the induction motor based on the information detected by the rotation speed sensor and information indicating the gear state of the transmission in the low speed (rotation speed) region where the speed detection accuracy is degraded, while controlling the induction motor using a method of controlling the induction motor based on the information which may be processed easily detected by the vehicle sensor, so that the induction motor may be controlled efficiently.

In this case, if an arrangement is adopted in which a rotation speed of the induction motor is derived based on the information detected by the vehicle speed sensor and the induction motor is controlled based on the derived rotation speed, the induction motor maybe controlled accurately even when the form of the signal received from the vehicle side and the form of the signal indicating the rotation speed of the induction motor in the control circuit (control means) are different.

Brief Description of Drawings

Figure 1 is a schematic configuration diagram of a vehicle equipped with a retarder according to a first embodiment of the present invention.
Figure 2 is a graph illustrating the characteristics of an induction motor mounted on the retarder described above.
Figure 3 is a schematic configuration diagram of a vehicle equipped with a retarder according to a second embodiment of the present invention.
Figure 4 is a graph illustrating the relationship between the engine rotation speed and the motor rotation speed.

Best Mode for Carrying Out the Invention

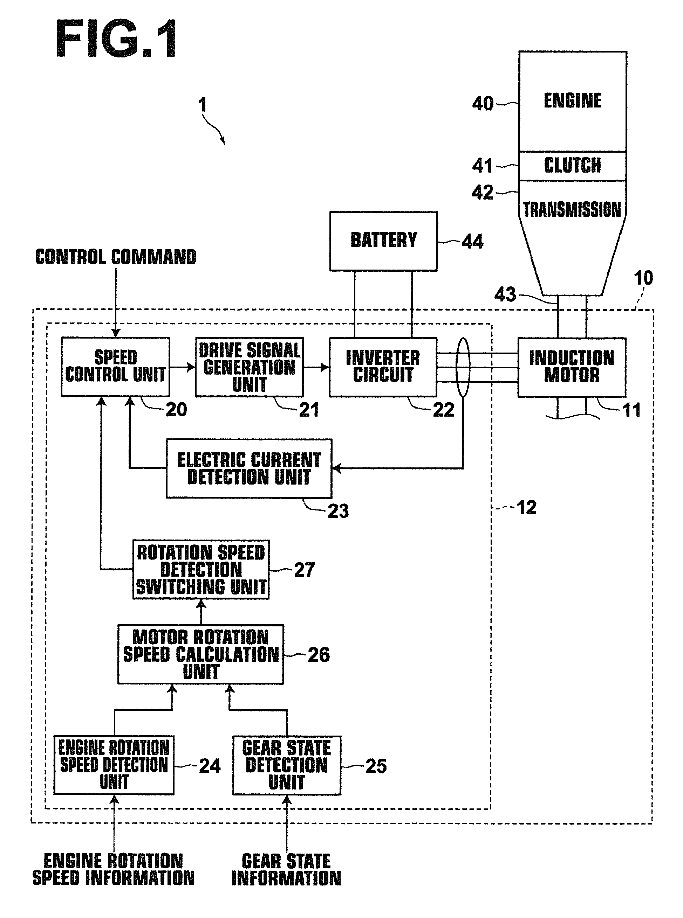

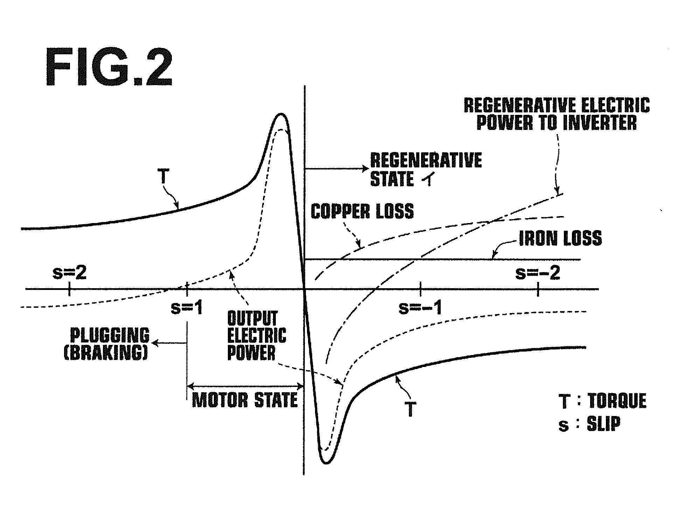

Hereinafter, a first embodiment of the retarder of the present invention will be described in detail with reference to the accompanying drawings. Figure 1 is a schematic configuration diagram of a vehicle equipped with a retarder according to a first embodiment of the present invention and Figure 2 is a graph illustrating the characteristics of an induction motor mounted on the retarder described above.

A vehicle 1 basically includes an engine 40 for driving the axle of the vehicle, a transmission 42 that performs conversion between the output rotation speed of the engine 40 and the torque by a combination of gears, a clutch for joining/separating connection between the engine 40 and the transmission 42, a retarder 10 for applying braking or torque to the rotation of the main shaft of the engine 40 (output shaft of the transmission 42) or generating electric power by the rotation of the main shaft of the engine 40, a battery 44 for storing/supplying electric power, and the like.

The retarder 10 of the present embodiment is capable of performing any of brake application, electric power generation, and torque generation, and includes an induction motor 11 coupled to the output shaft 43 of the transmission 42 and a control unit (control means) 12 for controlling the induction motor 11.

The control unit 12 includes a speed control unit 20 that performs speed control of the induction motor 11 by receiving an operation control command from the vehicle 1 side (outside of the retarder 10), a drive signal generation unit 21 that generates a drive signal for driving an inverter circuit 22, to be described later, based on an instruction from the speed control unit 20, the inverter circuit 22 for controlling the induction motor 11 and sending electric power generated by the induction motor 11 to the battery 44, and an electric current detection unit 23 that detects an amount of electric current flowing in and out of the induction motor 11.

Further, the control unit 12 includes an engine rotation speed detection unit 24 that receives information detected by a rotation speed sensor for the engine 40 from the vehicle 1 side (outside of the retarder 10), a gear state detection unit 25 that receives information indicating a gear state of the transmission 42 (in the present embodiment, information indicating a gear stage) also from the vehicle 1 side (outside of the retarder 10), a motor rotation speed calculation unit 26 that performs signal conversion to a form that allows the speed control unit 20 to correctly recognize the rotation speed of the induction motor 11 based on the information detected by the rotation speed sensor for the engine 40 and information indicating the gear state of the transmission 42, and a rotation speed detection switching unit 27 that switches whether or not to send a rotation speed signal obtained by the motor rotation speed calculation unit 26 to the speed control unit 20.

As the rotor of the induction motor 11 is coupled to the output shaft 43 of the transmission 42 and the rotation speed of the induction motor 11 is the same as that of the output shaft 43, the rotation speed of the induction motor 11 may be obtained by calculating the rotation speed of the output shaft 43 based on the information detected by the rotation speed sensor for the engine 40 and the information indicating the gear state of the transmission 42.

In the present embodiment, information received by the engine rotation speed detection unit 24 and the gear state detection unit 25 is a digital signal flowing through an in-vehicle digital communication system, such as CAN (Controlled Area Network) or the like, within the vehicle 1.

As a functional block diagram, the engine rotation speed detection unit 24 and the gear state detection unit 25 are depicted independently in Figure 1, but a configuration may be adopted in which the information detected by the rotation speed sensor for the engine 40 and the information indicating the gear state of the transmission 42 are received by the same signal receiving unit.

The motor rotation speed calculation unit 26 has information of speed reduction ratio at each gear stage in advance, calculates a numerical value of the rotation speed of the output shaft of the transmission 42 by dividing the rotation speed of the engine 40 by the current speed reduction ratio of the transmission 42, then based on the numerical value, performs signal conversion to a form that allows the speed control unit 20 to recognize the rotation speed of the induction motor 11, and outputs the converted rotation speed signal to the speed control unit 20.

Based on an operation control command from the vehicle 1 side (outside of the retarder 10), the speed control unit 20 performs appropriate control of the induction motor 11 by adjusting the slip amount of the induction motor 11 according to the characteristics of induction motor shown in Figure 2 based on the rotation speed signal outputted from the motor rotation speed calculation unit 26.

The term "slip" as used herein refers to the ratio of the relative speed, which is the difference between the synchronous speed $N_S$ (rpm) and the actual rotation speed N (rpm), to the synchronous speed $N_S$, and represented by a formula (1) given below:

$$s = (N_S - N)/N_S \; ------------- \; (1)$$

The retarder 10 of the present embodiment is capable of performing any of brake application, electric power generation, and torque generation, and controls the induction motor 11 such that the slip becomes greater than a value of 1 during braking. Further, it controls the induction motor 11 such that the slip is greater than a value of 0 and smaller than a value of 1 during motor assisting (torque generation).

Further, it controls the induction motor 11 such that the slip is smaller than a value of 0 during regenerative operation (electric power generation). It is common that the slip is set close to 0 where the electric power generation amount is large (region where the value of regenerative electric power shown by the dash-dot line is small in the vertical axis direction in Figure 2) but, if the storage capacity of the battery 44 becomes full during the regenerative operation, the regenerative operation cannot be continued. Therefore, if the storage capacity of the battery 44 becomes full during the regenerative operation, the regenerative operation may be continued without interruption by increasing the slip in the negative direction and shifting to a region where electric power consumption exceeds the regenerative electric power (region where the value of regenerative electric power shown by the dash-dot line becomes plus in the vertical axis direction in Figure 2).

Such arrangement described above allows the rotation speed of the motor to be obtained without mounting a rotation speed sensor on the induction motor 11 itself, whereby accurate sensor-less control is possible at low cost and regardless of the operation state of the motor.

If information of disconnection of a clutch 41 of the vehicle 1 is obtained, or when the gear of the transmission 42 is in neutral, or further if the rotation speed of the engine 40 is increased rapidly, the retarder 10 may be prevented from falling into a dangerous operating condition based on inaccurate information by putting the induction motor 11 into uncontrolled state in which any control to the induction motor is stopped or controlling the induction motor such that neither driving torque nor braking torque is generated, assuming that the clutch is being disconnected or the gear is being in neutral.

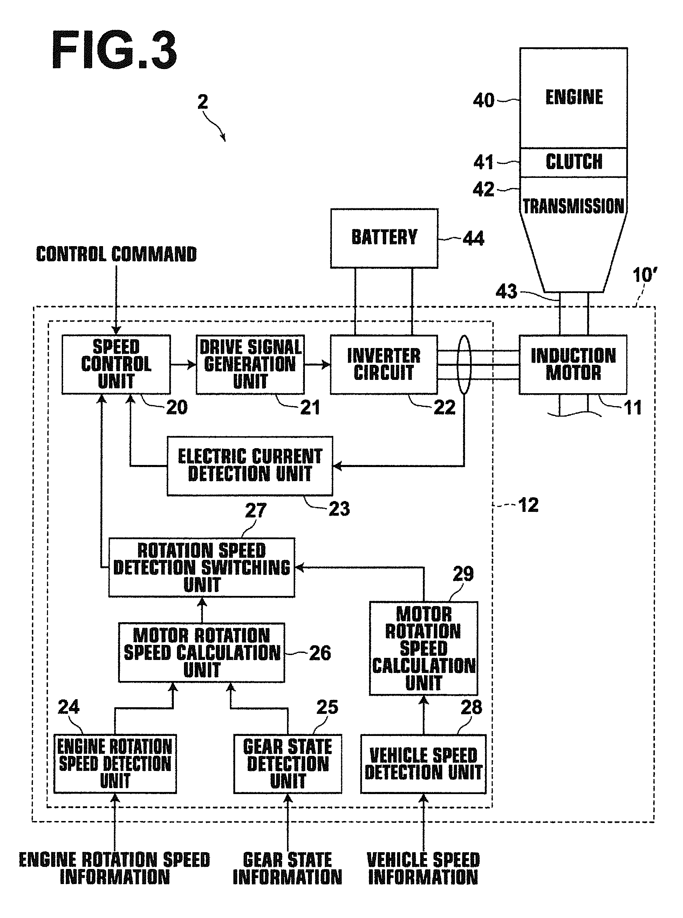

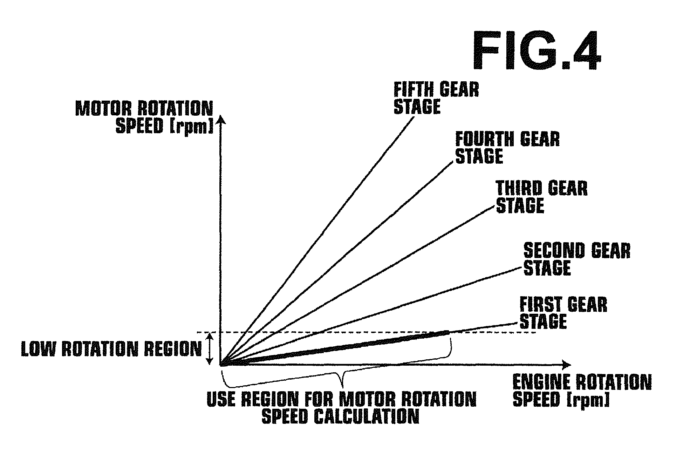

Next, a second embodiment of the retarder of the present invention will be described in detail. Figure 3 is a schematic configuration diagram of a vehicle equipped with a retarder according to a second embodiment of the present invention, and Figure 4 is a graph illustrating the relationship between the engine rotation speed and the motor rotation speed. In the present embodiment, the configuration of the control unit 12 is changed in comparison with the first embodiment. Note that the elements identical to those of Figure 1 are given the same reference numerals and will not be elaborated upon further here unless otherwise specifically required, and only the difference is basically described here.

The control unit 12 includes a speed control unit 20 that performs speed control of an induction motor 11 by receiving an operation control command from the vehicle 2 side (outside of the retarder 10'), a drive signal generation unit 21 that generates a drive signal for driving an inverter circuit 22, to be described later, based on an instruction from the speed control unit 20, the inverter circuit 22 for controlling the induction motor 11 and sending electric power generated by the induction motor 11 to the battery 44, and an electric current detection unit 23 that detects an amount of electric current flowing in and out of the induction motor 11.

Further, the control unit 12 includes an engine rotation speed detection unit 24 that receives information detected by a rotation speed sensor for the engine 40 from the vehicle 2 side (outside of the retarder 10'), a gear state detection unit 25 that receives information indicating a gear state of the transmission 42 also from the vehicle 2 side (outside of the retarder 10'), a motor rotation speed calculation unit 26 that performs signal conversion to a form that allows the speed control unit 20 to correctly recognize the rotation speed of the induction motor 11 based on the information detected by the rotation speed sensor for the engine 40 and information indicating the gear state of the transmission 42, a vehicle speed detection unit 28 that receives information detected by a vehicle speed sensor for the vehicle 2 from the vehicle 2 side (outside of the retarder 10'), a motor rotation speed calculation unit 29 that performs signal conversion to a form that allows the speed control unit 20 to correctly recognize the rotation speed of the induction motor 11 based on the information (signal) detected by the vehicle speed sensor, and a rotation speed detection switching unit 27 that performs switching to send a rotation speed signal obtained by the motor rotation speed calculation unit 26, to send a rotation speed signal obtained by the motor rotation speed calculation unit 29, or not to send any rotation speed signal to the speed control unit 20.

In the present embodiment, information received by the engine rotation speed detection unit 24, the gear state detection unit 25, and the vehicle speed detection unit 28 is a digital signal flowing through an in-vehicle digital communication system, such as CAN (Controlled Area Network) or the like, within the vehicle 2.

As a functional block diagram, the engine rotation speed detection unit 24, the gear state detection unit 25, and the vehicle speed detection unit 28 are depicted independently in Figure 3, but a configuration may be adopted in which the information detected by the rotation speed sensor for the engine 40, the information indicating the gear state of the transmission 42, and information detected by the vehicle speed sensor are received by the same signal receiving unit.

As the vehicle speed sensor for the vehicle 2 is a sensor which generally detects the rotation speed of the output shaft of the transmission 42, the induction motor 11 may be controlled based also on the information detected by the vehicle speed sensor and, in this case, the induction motor 11 may be controlled by the processing easier than to derive the rotation speed of the induction motor 11 (i.e., rotation speed of the output shaft of the transmission 42) based on the information detected by the rotation speed sensor for the engine 40 and the information indicating the gear state of the transmission 42.

Vehicle speed sensors which generally use rotation sensors, such as resolvers and the like, the speed detection accuracy is not so high in a low speed (low rotation) region and the induction motor may not be controlled accurately in the low speed region. The speed detection accuracy of the rotation speed sensor for the engine 40 which is a sensor identical to the vehicle speed sensor is not so high in the low speed region as in the vehicle speed sensor but, unless the speed reduction ratio of the transmission 42 falls below 1, the rotation speed of the rotation speed sensor for the engine 40 is higher than that of the vehicle speed sensor, so that higher speed detection accuracy may be obtained by deriving the rotation speed of the induction motor 11 based on the information detected by the rotation speed sensor for the engine 40 and the information indicating the gear state of the transmission 42 under such circumstances.

An example relationship between the engine rotation speed and the motor rotation speed is illustrated in the graph of Figure 4. As illustrated in the graph, the rotation speed of the engine 40 is high with respect to the rotation speed of the induction motor 11 (i. e., rotation speed of the output shaft of the transmission 42), in particular, while the gear is in the first speed stage. Therefore, the rotation speed detection switching unit 27 obtains information detected by the rotation speed sensor for the engine 40 and information indicating the gear state of the transmission 42, and performs switching such that the rotation speed signal obtained by the motor rotation speed calculation unit 26 (rotation speed signal based on the rotation speed of the engine 40 and the gear state) is sent to the speed control unit 20 if the gear is in the first speed stage and the rotation speed of the engine 40 is in the region lower than a predetermined rotation speed. In all the other states, the rotation speed detection switching unit 27 performs switching such that the rotation speed signal obtained by the motor rotation speed calculation unit 29 (rotation speed signal based on the vehicle speed sensor) is sent to the speed control unit 20.

Note that, as the rotation speed sensor for the engine 40 is higher than that of the vehicle speed sensor in all gear stages other than that in which the speed reduction ratio is less than 1, the switching may be performed such that the rotation speed signal obtained by the motor rotation speed calculation unit 26 (rotation speed signal based on the rotation speed of the engine 40 and the gear state) is sent to the speed control unit 20 not only in the first speed stage but also in all gear stages other than that in which the speed reduction ratio is less than 1 in the region where the rotation speed of the induction motor 11 is low and the accuracy of the rotation speed signal based on the vehicle speed sensor is not so high (the region below the dotted line in Figure 4).

Based on an operation control command from the vehicle 2 side (outside of the retarder 10'), the speed control unit 20 performs appropriate control of the induction motor 11 by adjusting the slippage of the induction motor 11 according to the characteristics of induction motor as shown in Figure 2 based on the rotation speed signal outputted from the rotation speed detection switching unit 27.

Such arrangement described above allows identical effects to those of the first embodiment to be obtained. Further, while controlling the induction motor 11 using a method of controlling the induction motor 11 based on the easily processed information detected by the vehicle sensor, the speed detection accuracy may be improved by the use of a method of controlling the induction motor 11 based on the information detected by the rotation speed sensor for the engine 40 and information indicating the gear state of the transmission 42 in the low speed (rotation speed) region where the speed detection accuracy is degraded, so that the induction motor 11 may be controlled efficiently.

So far, the preferred embodiments of the present invention have been described, but the present invention is not limited to the aforementioned embodiments.

For example, in each of the first and the second embodiments, the information received from the vehicle 1, 2 (retarder 10, 10') as the information detected by the rotation speed sensor for the engine 40 or the information detected by the vehicle speed sensor is not limited to the digital signal described above and may be the output signal itself of each sensor (so-called a rotation pulse signal or vehicle speed pulse signal), and in that case, the received pulse signal may be converted to a signal that allows the speed control unit 20 to correctly recognize the rotation speed of the induction motor 11 in the motor rotation speed calculation unit 26, 29 and outputted. If the vehicle speed pulse signal is in an identical form to that of the signal that allows the speed control unit 20 to correctly recognize the rotation speed of the induction motor 11, the conversion is not required.

It should be understood that various modifications and changes other than the foregoing may also be made without departing from the spirit of the present invention.

**Claims**

1. A retarder used in a vehicle in which an axle is driven by an internal combustion engine via a transmission, the retarder comprising:

    an induction motor coupled to an output shaft of the transmission; and
    a control means that derives a rotation speed of the induction motor based on information detected by a rotation speed sensor for the internal combustion engine provided in the vehicle and information indicating a gear state of the transmission obtained from the vehicle, and controls the induction motor based on the derived rotation speed.

2. The retarder as claimed in claim 1, wherein the control means is a means that puts the induction motor into uncontrolled state in which any control to the induction motor is stopped or controls the induction motor such that neither driving torque nor braking torque is generated if a variation in rotation speed of the internal combustion engine per unit time exceeds a predetermined threshold value.

3. The retarder as claimed in claim 1 or 2, wherein:

    the vehicle comprises a clutch between the internal combustion engine and the transmission; and
    the control means is a means that puts the induction motor into uncontrolled state in which any control to the induction motor is stopped or controls the induction motor such that neither driving torque nor braking torque is generated if information indicating disconnection of the clutch is obtained.

4. The retarder as claimed in any of claims 1 to 3, wherein the control means is a means that puts the induction motor into uncontrolled state in which any control to the induction motor is stopped or controls the induction motor such that neither driving torque nor braking torque is generated if the gear of the transmission is in neutral.

5. The retarder as claimed in any of claims 1 to 4, wherein:

    the control means further includes a function to control the induction motor based on information detected by a vehicle speed sensor provided in the vehicle; and
    the control means is a means that performs switching, based on at least one of the information detected by the vehicle speed sensor and the information indicating a gear state of the transmission, whether to control the induction motor based on the information detected by the rotation speed sensor and the information indicating a gear state of the transmission or to control the induction motor based on the information detected by the vehicle speed sensor.

6. The retarder as claimed in claim 5, wherein the control means is a means that derives a rotation speed of the induction motor based on the information detected by the vehicle speed sensor and controls the induction motor based on the derived rotation speed.

7. A control method in a retarder used in a vehicle in which an axle is driven by an internal combustion engine via a transmission, the method controlling an induction motor coupled to an output shaft of the transmission, wherein the method derives a rotation speed of the induction motor based on information detected by a rotation speed sensor for the internal combustion engine provided in the vehicle and information indicating a gear state of the transmission obtained from the vehicle, and controls the induction motor based on the derived rotation speed.

8. The control method as claimed in claim 7, wherein the control method puts the induction motor into uncontrolled state in which any control to the induction motor is stopped or controls the induction motor such that neither driving torque nor braking torque is generated if a variation in rotation speed of the internal combustion engine per unit time exceeds a predetermined threshold value.

9. The control method as claimed in claim 7 or 8, wherein the control method puts the induction motor into uncontrolled state in which any control to the induction motor is stopped or controls the induction motor such that neither driving torque nor braking torque is generated if information indicating disconnection of a clutch provided in the vehicle is obtained.

10. The control method as claimed in any of claims 7 to 9, wherein the control method puts the induction motor into uncontrolled state in which any control to the induction motor is stopped or controls the induction motor such that neither driving torque nor braking torque is generated if the gear of the transmission is in neutral.

11. The control method as claimed in any of claims 7 to 10, wherein:

the method further obtains information detected by a vehicle speed sensor provided in the vehicle; and
the method performs switching, based on at least one of the information detected by the vehicle speed sensor and the information indicating a gear state of the transmission, whether to control the induction motor based on the information detected by the rotation speed sensor and the information indicating a gear state of the transmission or to control the induction motor based on the information detected by the vehicle speed sensor.

12. The control method as claimed in claim 11, wherein the control method derives a rotation speed of the induction motor based on the information detected by the vehicle speed sensor and controls the induction motor based on the derived rotation speed.

# FIG.1

1

CONTROL COMMAND

ENGINE — 40

CLUTCH — 41

TRANSMISSION — 42

BATTERY — 44

43

10

| SPEED CONTROL UNIT | DRIVE SIGNAL GENERATION UNIT | INVERTER CIRCUIT | INDUCTION MOTOR |

20    21    22    11

ELECTRIC CURRENT DETECTION UNIT

23

12

ROTATION SPEED DETECTION SWITCHING UNIT — 27

MOTOR ROTATION SPEED CALCULATION UNIT — 26

ENGINE ROTATION SPEED DETECTION UNIT — 24

GEAR STATE DETECTION UNIT — 25

ENGINE ROTATION SPEED INFORMATION

GEAR STATE INFORMATION

# FIG.2

# FIG.3

# FIG.4

MOTOR ROTATION SPEED [rpm]

FIFTH GEAR STAGE

FOURTH GEAR STAGE

THIRD GEAR STAGE

SECOND GEAR STAGE

FIRST GEAR STAGE

LOW ROTATION REGION

ENGINE ROTATION SPEED [rpm]

USE REGION FOR MOTOR ROTATION SPEED CALCULATION

**INTERNATIONAL SEARCH REPORT**

International application No.

PCT/JP2013/002541

A. CLASSIFICATION OF SUBJECT MATTER
*H02P15/00*(2006.01)i, *H02P23/00*(2006.01)i

According to International Patent Classification (IPC) or to both national classification and IPC

B. FIELDS SEARCHED

Minimum documentation searched (classification system followed by classification symbols)
H02P15/00, H02P23/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 4-24156 A (Hino Motors, Ltd.),<br>28 January 1992 (28.01.1992),<br>page 3, upper left column, line 20 to page 4,<br>lower left column, line 8; fig. 1 to 3<br>(Family: none) | 1,7<br>2-6,8-12 |
| Y<br>A | JP 8-126118 A (Hino Motors, Ltd., Toshiba<br>Corp.),<br>17 May 1996 (17.05.1996),<br>paragraph [0037]; fig. 8<br>& JP 63-314101 A       & US 5053632 A<br>& US 5172006 A        & EP 352323 A1<br>& WO 1988/006107 A1    & DE 3889911 T2 | 1,7<br>2-6,8-12 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 August, 2013 (07.08.13) | Date of mailing of the international search report<br>20 August, 2013 (20.08.13) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2013/002541

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-328024 A  (Hino Motors, Ltd.), 17 November 1992 (17.11.1992), paragraphs [0012] to [0023]; fig. 1 to 3 (Family: none) | 1-12 |
| A | JP 4-38200 A  (Hino Motors, Ltd.), 07 February 1992 (07.02.1992), page 3, upper right column, line 1 to page 4, lower left column, line 4; fig. 1 to 2 (Family: none) | 1-12 |
| A | JP 9-68064 A  (Hino Motors, Ltd.), 11 March 1997 (11.03.1997), paragraphs [0017] to [0031]; fig. 1 to 5 (Family: none) | 1-12 |
| A | JP 2010-163872 A  (Denso Corp.), 29 July 2010 (29.07.2010), paragraphs [0052] to [0054]; fig. 1 (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8126118 A
- JP 10225096 A